Europäisches Patentamt

European Patent Office

Office européen des brevets

(19)

(11) Numéro de publication: **0 196 714
B1**

(12) **FASCICULE DE BREVET EUROPEEN**

(45) Date de publication du fascicule du brevet:
20.06.90

(51) Int. Cl.⁵: **G01S 15/02**, G01S 7/52,
G01S 7/62

(21) Numéro de dépôt: 86200475.1

(22) Date de dépôt: 21.03.86

(54) **Procédé et appareil d'exploration de milieux par échographie ultrasonore.**

(30) Priorité: 29.03.85 FR 8504822

(43) Date de publication de la demande:
08.10.86 Bulletin 86/41

(45) Mention de la délivrance du brevet:
20.06.90 Bulletin 90/25

(84) Etats contractants désignés:
DE FR GB

(56) Documents cités:
EP-A- 0 100 234
US-A- 4 470 303

IBM JOURNAL OF RESEARCH AND DEVELOPMENT,
vol. 26, no. 6, novembre 1982, pages 746-759, New York,
US; E.J. FARRELL: "Backscatter and attenuation
imaging from ultrasonic scanning in medicine"
IEEE 1983 ULTRASONICS SYMPOSIUM PROCEEDINGS,
éditor B.R. McAVOY, IEEE Group on Sonics &
Ultrasonics, 31 octobre - 1,2 novembre 1983, Atlanta,
Georgia, vol. 2, pages 835-840, New York, US; J.L.
BERNATETS et al.: "Estimation of frequency dependent
attenuation in biological tissue by a time-frequency
representation of the echographic A-lines" 000
IEEE TRANSACTIONS ON BIOMEDICAL ENGINEERING,
vol. BME-31, no. 8, août 1984, pages 537-545, IEEE, New

(73) Titulaire: **LABORATOIRES D'ELECTRONIQUE PHILIPS,
3, Avenue Descartes, F-94450 Limeil-Brévannes(FR)**

(84) Etats contractants désignés: **FR**

(73) Titulaire: **N.V. Philips' Gloeilampenfabrieken,
Groenewoudseweg 1, NL-5621 BA Eindhoven(NL)**

(84) Etats contractants désignés: **DE GB**

(72) Inventeur: **Nicolas, Jean-Marie, Société Civile
S.P.I.D. 209 rue de l'Université, F-75007 Paris(FR)**

(74) Mandataire: **Landousy, Christian et al, Société Civile
S.P.I.D. 209, Rue de l'Université, F-75007 Paris(FR)**

(56) Documents cités: (suite)
York, US; ROMAN KUC et al.: "Diffraction effects in
reflected ultrasound spectral estimates"

ACTORUM AG

## Description

La présente invention concerne un procédé d'exploration de milieux par échographie ultrasonore comprenant une émission répétée de signaux ultrasonores par au moins un transducteur ultrasonore et la réception des échos ultrasonores correspondant aux obstacles rencontrés dans leur direction de propagation par les signaux émis, ledit procédé comprenant les opérations suivantes:

(a) mémorisation des échos d'une ligne échographique;

(b) pour deux fenêtres temporelles distinctes liées à des instants ($\tau_A$, $\tau_B$), détermination des spectres de puissance ($R(\tau_A,f)$, $R(\tau_B,f)$ corrigés de l'effet de diffraction.

L'invention concerne également un appareil pour la mise en œuvre d'un tel procédé. Un tel appareil est utilisable par exemple dans le domaine du contrôle non destructif des matériaux et pour l'exploration de tissus biologiques.

Une image échographique ultrasonore traditionnelle est obtenue par détection de l'enveloppe des échos engendrés dans les tissus par un faisceau d'ultrasons. Les échos les plus importants prenant naissance aux frontières des organes, ces images montrent principalement les contours de ces derniers. Toutes les informations liées à la phase (et donc à la fréquence) du signal sont alors perdues. Or ces informations peuvent être reliées à de bons indicateurs de certaines pathologies diffuses très difficiles à diagnostiquer par d'autres moyens.

Un but de l'invention est de proposer un procédé d'examen de milieux par échographie ultrasonore dans lequel on s'attache à déterminer la dépendance en fréquence de la fonction de diffusion du milieu examiné.

A cet effet, le procédé selon l'invention est caractérisé en ce qu'il est destiné à déterminer la dépendance en fréquence de la fonction de diffusion du milieu exploré $U(f) = af^b$, a et b étant des coefficients, et la fonction de diffusion étant liée au spectre de puissance $S_W(\tau,f)$ des échos reçus dans une fenêtre temporelle W à l'instant $\tau$ par la relation $S_W(\tau,f) = |G(f)|^2 \cdot |(U(f)|^2 \cdot D(\tau,f) \cdot e^{-2\alpha(f)c\tau}$ où $|G(f)|^2$ dépend du signal d'émission et du transducteur, $D(\tau,f)$ traduit l'effet de diffraction, et $\alpha(f)$ et c correspondent respectivement à l'atténuation et à la vitesse des signaux ultrasonores dans le milieu exploré, et en ce qu'il comprend également les opérations suivantes:

(c) mémorisation et/ou représentation de la dépendance en fréquence de la fonction de diffusion du milieu exploré selon les étapes suivantes:

($c_1$) calcul, à partir des spectres de puissance corrigés $R(\tau_A,f)$, $R(\tau_B,f)$, de l'expression:

$$T(f,\tau_A,\tau_B) = \frac{|R(\tau_A,f)|}{R(\tau_B,f)}^\xi \quad \text{où } \xi = \tau_B/\tau_A \; ;$$

($c_2$) conversion sous forme logarithmique à base 10 de l'expression $T(f) \cdot \frac{1}{2}(\xi-1)$;

($c_3$) mémorisation et/ou représentation sur un dispositif de visualisation d'un signal proportionnel à ladite forme logarithmique;

(d) renouvellement des opérations précédentes pour d'autres paires de fenêtres temporelles, correspondant à chaque fois à des limites de zones homogènes du milieu exploré, et pour d'autres lignes échographiques.

Par la mise en œuvre de ce procédé, on parvient à évaluer de façon quantitative la fonction de diffusion du milieu exploré, ce qui permet une caractérisation de ce milieu et la connaissance de son état pathologique.

Les demandes de brevet EP-A 0 196 713 et EP-A 0 197 582 déposées le même jour par les sociétés demanderesses décrivent également, l'une et l'autre, un procédé de ce type, à cette différence près que les traitements opérés et les circuits correspondants sont de nature différente. En effet, dans la première de ces demandes, on ne prévoit pas d'utiliser, comme dans la présente demande, de rapports de spectres de puissance pour deux instants ou profondeurs d'observation distincts, tandis que, dans la seconde de ces demandes, on propose, pour la mise en évidence de la dépendance en fréquence de la fonction de diffusion, une troisième solution procédant par bandes de fréquence adjacentes et par référence à un fantôme de même atténuation que le milieu exploré.

Un autre but de l'invention est de proposer un appareil d'exploration de milieux par échographie ultrasonore permettant ladite mise en œuvre.

L'appareil selon l'invention est à cet effet caractérisé en ce que, pour déterminer la dépendance en fréquence de la fonction de diffusion du milieu exploré $U(f) = af^b$, a et b étant des coefficients, et la fonction de diffusion étant liée au spectre de puissance $S_W(\tau,f)$ des échos reçus dans une fenêtre temporelle W à l'instant $\tau$ par la relation $S_W(\tau,f) = |G(f)|^2 \cdot |(U(f)|^2 \cdot D(\tau,f) \cdot e^{-2\alpha(f)c\tau}$ où $|G(f)|^2$ dépend du

signal d'émission et du transducteur, $D(\tau,f)$ traduit l'effet de filtrage dû à la diffraction, et $\alpha(f)$ et c correspondent respectivement à l'atténuation et à la vitesse des signaux ultrasonores dans le milieu exploré, ledit étage de réception comprend également:

(C) un étage de mémorisation et/ou de représentation de la fonction de diffusion du milieu exploré, comprenant en série:

(a) un circuit de calcul, à partir des spectres de puissance corrigés $R(\tau_A,f)$ et $R(\tau_B,f)$, de l'expression:

$$T = (\frac{a_1}{a_2})^{2(\xi-1)} \cdot (f^{b_1-b_2})^{2(\xi-1)} = \frac{|R(\tau_A,f)|^{\xi}}{R(\tau_B,f)}$$

où $a_1$, $a_2$, $b_1$, $b_2$ sont, respectivement pour le milieu exploré et pour un milieu de référence servant à la correction de l'effet de diffraction et dans lequel la dépendance en fréquence de la fonction de diffusion est connue, les valeurs des coefficients a et b de ladite fonction de diffusion et où $\xi$ est le rapport des deux instants ($\tau_A$, $\tau_B$);

(b) un amplificateur logarithmique délivrant un signal proportionnel à $\log_{10} T(f) \cdot \frac{1}{2}(\xi-1)$;

(c) un circuit de traitement arithméthique, qui permet la mémorisation, ou la représentation sur un dispositif de visualisation, de la fonction de diffusion du milieu exploré.

Le document Ultrasonics Symposium Proceedings, 1983, IEEE, B.R. McAvoy Editor, 31 octobre–2 novembre, pages 835 à 840, intitulé "Estimation of frequency dependent attenuation in biological tissue by a time-frequency representation of the echographic A-lines", de J.L. Bernatets et F. Hottier, décrit un procédé d'exploration de milieux par échographie ultrasonore qui, après émission répétée de signaux ultrasonores et réception des échos renvoyés, prévoit des opérations de mémorisation de ligne échographique et de détermination de rapport de spectres de puissance pour des instants différents. Mais les traitements qui suivent ces opérations initiales sont ensuite distincts. En effet, le document cité s'attache ensuite à étudier la variation de l'atténuation en fonction de la fréquence à l'aide de l'observation du décalage de la fréquence centrale, tandis que, dans le cas présent, on opère l'étude de la fonction de diffusion, grandeur bien distincte de l'atténuation et qui caractérise l'aptitude corpusculaire du milieu exploré à renvoyer des ondes ultrasonores de façon omnidirectionnelle.

Les particularités et avantages de l'invention apparaîtront de façon plus détaillée dans la description qui suit et dans les dessins annexés donnés à titre d'exemples non limitatifs et dans lesquels:

— la figure 1 montre un exemple de réalisation de l'appareil selon l'invention;
— la figure 2 est une courbe qui met en évidence les résultats des opérations effectuées dans le cadre de l'invention par le circuit de traitement arithmétique de l'appareil de la figure 1.

L'analyse, évoquée plus haut, de la dépendance en fréquence de la fonction de diffusion du milieu examiné est réalisée par l'intermédiaire d'une comparaison de spectres moyens de puissance. On sait que l'expression d'un spectre moyen de puissance peut s'écrire, pour une fenêtre temporelle W à l'instant $\tau$:

$$S_W(\tau,f) = |G(f)|^2 \cdot |U(f)|^2 \cdot D(\tau,f) \cdot e^{-2\alpha(f)c\tau} \qquad (1)$$

Dans cette expression, $|G(f)|^2$ ne dépend que du signal d'émission et des caractéristiques acoustiques et électriques du transducteur, $D(\tau,f)$ traduit l'effet de filtrage dû à la diffraction, $\alpha(f)$ et c expriment respectivement l'atténuation et la vitesse des ondes ultrasonores dans le milieu examiné, et $U(f)$ est la fonction de diffusion du milieu. On supposera par la suite que l'on dispose d'un milieu de référence dans lequel la dépendance en fréquence de la fonction de diffusion est connue. En opérant alors avec le même transducteur ultrasonore et à signal d'émission constant, l'expression qui donne le quotient des spectres de puissance associés au milieu exploré et au milieu de référence, à savoir:

$$R(\tau,f) = \frac{|G_1(f)|^2 \cdot D_1(\tau,f) \cdot |U_1(f)|^2 \cdot \exp^{-2\alpha_1(f)c\tau}}{|G_2(f)|^2 \cdot D_2(\tau,f) \cdot |U_2(f)|^2 \cdot \exp^{-2\alpha_2(f)c\tau}} \qquad (2)$$

peut se simplifier et se mettre sous la forme:

$$R(\tau,f) = \frac{|U_1(f)|^2}{|U_2(f)|^2} \exp^{-2(\alpha_1(f) - \alpha_2(f)).c\tau} \qquad (3)$$

On a par ailleurs supposé ci-dessus que:

$$U_1(f) = a_1 \, f^{b_1} \qquad (4)$$

$$U_2(f) = a_2 \, f^{b_2} \qquad (5)$$

D'où :

$$R(\alpha,f) = (\frac{a_1}{a_2})^2 \cdot (f^{b_1-b_2})^2 .\exp^{-2(\alpha_1(f) - \alpha_2(f)).c\tau} \qquad (6)$$

On s'affranchit alors de la connaissance des lois d'atténuation dans les milieux en effectuant le calcul du quotient R pour deux profondeurs correspondant à deux temps de vol $\tau_A$ et $\tau_B$, le milieu exploré étant homogène dans cette tranche de profondeurs:

$$R(\tau_A,f) = (\frac{a_1}{a_2})^2 \cdot (f^{b_1-b_2})^2 .\exp^{-2(\alpha_1(f) - \alpha_2(f)).c \, \tau_A} \qquad (7)$$

$$R(\tau_B,f) = (\frac{a_1}{a_2})^2 \cdot (f^{b_1-b_2})^2 .\exp^{-2(\alpha_1(f) - \alpha_2(f)).c \, \tau_B} \qquad (8)$$

On pose en outre $\tau_B = \xi \, \tau_A$, ce qui permet de déterminer l'expression (9):

$$T(f, \tau_A, \tau_B) = \frac{|R(\tau_A,f)|^\xi}{R(\tau_B,f)} = (\frac{a_1}{a_2})^{2\,(\xi-1)} \cdot (f^{b_1-b_2})^{2(\xi-1)} \qquad (9)$$

$$D'où : \quad f^{b_1-b_2} = \frac{a_2}{a_1} \cdot T(f)^{(\frac{1}{2(\xi-1)})} \qquad (10)$$

$$f^{b_1-b_2} = K \cdot T(f)^{\frac{1}{2(\xi-1)}} \qquad (11)$$

Comme le procédé et l'appareil selon l'invention permettent de connaître le terme de droite de l'expression (11), la dépendance en fréquence de la fonction de diffusion du milieu exploré, c'est-à-dire le coefficient $b_i$, peut être maintenant déterminée.

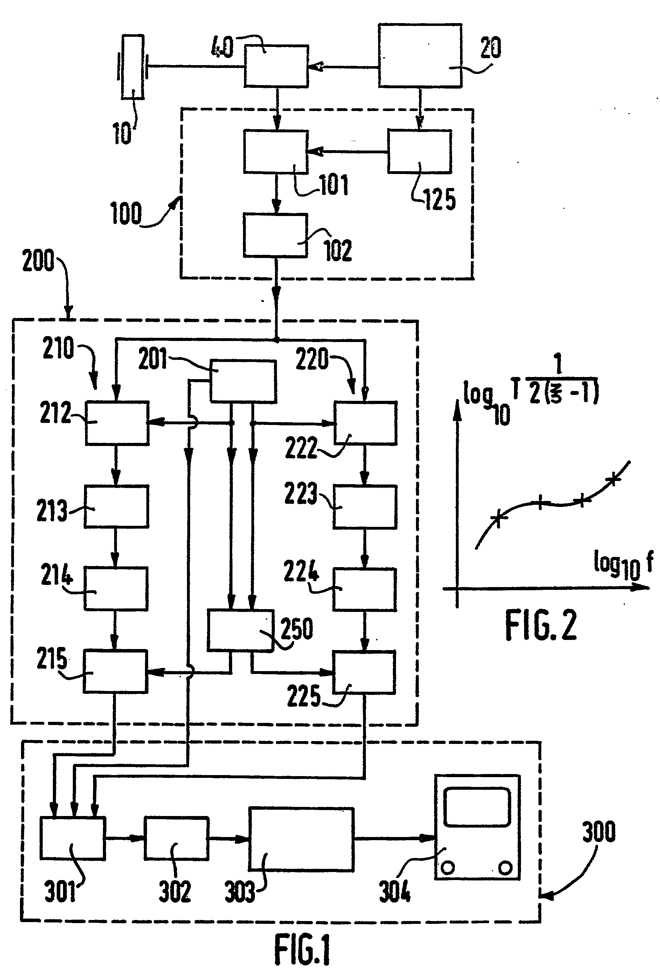

Cet accès à la connaissance de la dépendance en fréquence de la fonction de diffusion est permis grâce à la mise en œuvre du procédé selon l'invention dans l'appareil représenté sur la figure 1. Cet appareil est, dans le cas présent, équipé d'une sonde unique constituant le support d'un transducteur ultrasonore 10 et permettant d'obtenir des échographies de type A de milieux tels que des tissus biologiques. Il va sans dire que l'invention est applicable exactement de la même manière si l'on explore non plus seulement une ligne, mais toute une section plane des tissus soit à l'aide d'une sonde à déplacement manuel ou à déplacement mécanique angulaire dit sectoriel, associée à un écran de visualisation du type radar, soit à l'aide d'une barrette linéaire de p transducteurs ultrasonores définissant un même nombre p de directions d'exploration parallèles dans le milieu à examiner et associée à un circuit de commutation du dispositif de traitement d'échos successivement sur chaque transducteur ou groupe de transducteurs en fonctionnement, soit encore à l'aide d'une barrette de transducteurs dite à balayage électronique sectoriel, également associée à un circuit de commutation du dispositif de traitement ainsi qu'à un réseau de lignes à retard ou de déphaseurs.

Le transducteur 10 est associé d'une part à un étage d'émission 20 destiné à permettre une émission répétée de signaux ultrasonores par le transducteur dans une direction d'exploration quelconque à travers les tissus à examiner et d'autre part à un étage de réception destiné à assurer le traitement des échos ultrasonores reçus par le transducteur et correspondant aux obstacles rencontrés dans leurs directions de propagation par les signaux émis (ces obstacles sont repérés sur les échogrammes par les échos de grande amplitude qui matérialisent les frontières entre tissus dont on cherche à déterminer les coefficients différentiels d'atténuation ultrasonore). Cette association est en général réalisée par l'intermédiaire d'un circuit de sélection alternative 40 assurant la liaison exclusive soit de l'étage d'émission, soit de l'étage de réception, avec le transducteur (un tel circuit de sélection est mentionné par exemple dans le brevet des Etats-Unis d'Amérique N° 4 139 834). Ce circuit 40 évite la dégradation des signaux émis sous l'influence des signaux de réception ou, alternativement, l'aveuglement des signaux reçus par les signaux d'émission.

Dans le mode de réalisation décrit, l'étage de réception comprend en série d'une part un circuit 100 de mémorisation d'une ligne échographique (de type A), d'autre part un circuit de traitement 200, et enfin un circuit 300 de détermination de la dépendance en fréquence. Le circuit 100 comprend successivement un convertisseur analogique-numérique 101, piloté par un circuit d'horloge 125 lui-même commandé par l'horloge de l'étage d'émission, et une mémoire numérique 102. Le circuit 200 comprend deux voies 210 et 220 en parallèle, qui comprennent elles-mêmes chacune successivement un circuit de sélection temporelle 212 et 222, un circuit 213 et 223 de calcul de transformée de Fourier, un circuit 214 et 224 de calcul du module au carré pour le calcul du spectre de puissance, et un circuit de correction de diffraction.

Les circuits 212 et 222 sont ici des circuits 216 et 226 de multiplication de la sortie de la mémoire 102 par un signal en forme de créneau constituant une fenêtre temporelle dont la position est déterminée par un circuit 201 de sélection de temps de vol, le temps de vol, $\tau_A$ et $\tau_B$ respectivement, ainsi sélectionné dans chacune des deux voies correspondant par exemple au flanc avant du signal en forme de créneau. Le circuit 201 effectue également le calcul du rapport $\xi$ des temps de vol associés aux deux profondeurs sélectionnées. Le circuit de correction de diffraction est un circuit de division 215 et 225, chacun de ces circuits recevant sur une première entrée le signal de sortie du circuit de calcul du module au carré correspondant et sur une deuxième entrée un signal de division, dit de correction de diffraction, délivré respectivement par une sortie distincte d'une mémoire 250. Cette mémoire 250 est commandée par le circuit d'horloge 125 lui-même déclenché par l'horloge de l'étage d'émission, et est reliée également à la sortie du circuit 201 de sélection de temps de vol. Cette mémoire 250 est soit une mémoire morte programmable, de type PROM par exemple, soit une mémoire à accès aléatoire, et est chargée de la façon suivante, que le transducteur soit de type focalisant ou non. On opère la sélection d'une tranche du milieu à examiner située à l'avant de ce milieu par rapport à l'appareil et à une distance Z sur l'axe principale de propagation, le milieu intermédiaire entre cette tranche et l'appareil étant à faible atténuation, de l'eau par exemple. A signal d'émission constant, on détermine dans cette position le spectre énergétique du signal échographique, puis on reprend cette détermination à la même distance Z mais pour d'autres positions obtenues par déplacements perpendiculaires à l'axe principal de propagation, afin d'obtenir un spectre énergétique moyen (on effectuera par exemple une moyenne de 100 spectres autour de la même position). On répète ensuite la même détermination de spectre énergétique moyen à d'autres distances Z entre l'appareil et le milieu à examiner mais en considérant toujours dans ce milieu la même tranche grâce à l'action d'un circuit de sélection temporelle définissant une fenêtre de temps. On calcule alors, pour toutes ces positions successives le long de l'axe Z, les valeurs de correction de diffraction, les mesures effectuées ayant en effet éliminé toute influence de l'atténuation par le choix approprié du milieu intermédiaire, et ces valeurs sont introduites dans la mémoire 250. Dans le cas d'un transducteur non focalisant, la détermination des valeurs de correction peut aussi être effectuée sans faire appel à une tranche du milieu à examiner, en utilisant simplement la surface réflectrice, par exemple plane.

Les sorties des circuits de multiplication 215 et 225 délivrent des signaux qui sont proportionnels respectivement aux expressions (7) et (8) établies plus haut et qui sont fournis en parallèle au circuit 300 de détermination de la dépendance en fréquence. Ce circuit 300 comprend d'abord un circuit 301 de calcul de l'expression (10), ou (11) calculant T puis l'élevant à la puissance $1/(2\,(\xi-1))$. La valeur de $\xi$ est fournie au circuit 301 par l'intermédiaire d'une connexion en provenance du circuit 201. A la suite du circuit 301 est alors prévu un amplificateur logarithmique 302, qui délivre un signal proportionnel à $\log_{10} T^{\frac{1}{2}(\xi-1)}$, puis un circuit de traitement arithmétique 303 qui assure la mémorisation et/ou la représentation (voir la figure 2, en coordonnées logarithmiques) de la dépendance en fréquence de la fonction de diffusion, la représentation étant alors opérée sur un dispositif de visualisation 304. Bien entendu, lors de la mise en œuvre, dans l'appareil selon l'invention, des différentes opérations prévues de mémorisation d'une ligne échographique, de détermination de rapport de spectres, et de représentation de la dépendance en fréquence de la fonction de diffusion, ces opérations sont reprises pour d'autres paires de profondeurs d'observation correspondant à chaque fois à des limites de zones homogènes, ainsi que pour d'autres lignes échographiques.

**Revendications**

1. Procédé d'exploration de milieux par échographie ultrasonore comprenant une émission répétée de signaux ultrasonores par au moins un transducteur ultrasonore et la réception des échos ultrasonores correspondant aux obstacles rencontrés dans leur direction de propagation par les signaux émis, ledit procédé comprenant les opérations suivantes:

(a) mémorisation des échos d'une ligne échographique;

(b) pour deux fenêtres temporelles distinctes liées à des instants ($\tau_A$, $\tau_B$), détermination des spectres de puissance ($R(\tau_A,f)$, $R(\tau_B,f)$ corrigés de l'effet de diffraction; caractérisé en ce qu'il est destiné à déterminer la dépendance en fréquence de la fonction de diffusion du milieu exploré $U(f) = af^b$, a et b étant des coefficients, et la fonction de diffusion étant liée au spectre de puissance $S_W(\tau,f)$ des échos reçus dans une fenêtre temporelle W à l'instant $\tau$ par la relation $S_W(\tau,f) = |G(f)|^2 \cdot |(U(f)|^2 \cdot D(\tau,f) \cdot e^{-2\alpha(f)c\tau}$ où $|G(f)|^2$ dépend du signal d'émission et du transducteur, $D(\tau,f)$ traduit l'effet de diffraction, et $\alpha(f)$ et c correspondent respectivement à l'atténuation et à la vitesse des signaux ultrasonores dans le milieu exploré, et en ce qu'il comprend également les opérations suivantes:

(c) mémorisation et/ou représentation de la dépendance en fréquence de la fonction de diffusion du milieu exploré selon les étapes suivantes:

($c_1$) calcul, à partir des spectres de puissance corrigés $R(\tau_A,f)$ $R(\tau_B,f)$), de l'expression:

$$T(f,\tau_A,\tau_B) = \frac{|R(\tau_A,f)|^\xi}{R(\tau_B,f)} \quad \text{où} \quad \xi = \tau_B/\tau_A ;$$

($c_2$) conversion sous forme logarithmique à base 10 de l'expression $T(f) \cdot \frac{1}{2}(\xi-1)$;

($c_3$) mémorisation et/ou représentation sur un dispositif de visualisation d'un signal proportionnel à ladite forme logarithmique;

(d) renouvellement des opérations précédentes pour d'autres paires de fenêtres temporelles, correspondant à chaque fois à des limites de zones homogènes du milieu exploré, et pour d'autres lignes échographiques.

2. Appareil d'exploration de milieux par échographie ultrasonore pour la mise en œuvre du procédé selon la revendication 1, comportant au moins un transducteur ultrasonore associé à un étage d'émission pour assurer une émission répétée de signaux ultrasonores et à un étage de réception pour assurer la réception des échos ultrasonores correspondant aux obstacles rencontrés dans leur direction de propagation par les signaux émis, ledit étage de réception comprenant:

(A) un étage (100) de mémorisation des échos d'une ligne échographique, composé d'un convertisseur analogique-numérique (100) et d'une mémoire numérique (102);

(B) un étage (200) de détermination du rapport des spectres de puissance corrigés de l'effet de diffraction ($R(\tau_A,f)$, $R(\tau_B,f)$ pour deux fenêtres temporelles distinctes liées à des instants ($\tau_A$, $\tau_B$), ledit étage (200) étant composé de deux voies en parallèle (210, 220) comprenant chacune successivement un circuit de multiplication (212, 222) de la sortie de l'étage de mémorisation de ligne échographique par la sortie d'un circuit (201) de sélection de fenêtre temporelle, un circuit (213, 223) de calcul de transformée de Fourier, un circuit (214, 224) de calcul de module au carré, et un étage de correction de diffraction (215, 225, 250); caractérisé en ce que, pour déterminer la dépendance en fréquence de la fonction de diffusion du milieu exploré $U(f) = af^b$, a et b étant des coefficients, et la fonction de diffusion étant liée au spectre de puissance $S_W(\tau,f)$ des échos reçus dans une fenêtre temporelle W à l'instant $\tau$ par la relation $S_W(\tau,f) = |G(f)|^2 \cdot |(U(f)|^2 \cdot D(\tau,f) \cdot e^{-2\alpha(f)c\tau}$ où $|G(f)|^2$ dépend du signal d'émission et du transducteur, $D(\tau,f)$ traduit l'effet de filtrage dû à la diffraction, et $\alpha(f)$ et c correspondent respectivement à l'atténuation et à la vitesse des signaux ultrasonores dans le milieu exploré, ledit étage de réception comprend également:

(C) un étage (300) de mémorisation et/ou de représentation de la fonction de diffusion du milieu exploré, comprenant en série:

(a) un circuit (301) de calcul, à partir des spectres de puissance corrigés $R(\tau_A,f)$ et $R(\tau_B,f)$, de l'expression:

$$T = (\frac{a_1}{a_2})^{2(\xi-1)} \cdot (f^{b_1-b_2})^{2(\xi-1)} = \frac{|R(\tau_A,f)|^\xi}{R(\tau_B,f)}$$

où $a_1$, $a_2$, $b_1$, $b_2$ sont, respectivement pour le milieu exploré et pour un milieu de référence servant à la correction de l'effet de diffraction et dans lequel la dépendance en fréquence de la fonction de diffusion est connue, les valeurs des coefficients a et b de ladite fonction de diffusion et où $\xi$ est le rapport des deux instants ($\tau_A$, $\tau_B$);

(b) un amplificateur logarithmique (302) délivrant un signal proportionnel à $\log_{10}$ T(f) $\cdot \frac{1}{2}(\xi-1)$;
(c) un circuit (303) de traitement arithmétique, qui permet la mémorisation, ou la représentation sur un dispositif de visualisation (304), de la fonction de diffusion du milieu exploré.

## Claims

1. A method for the ultrasonic, echographic investigation of media, comprising a repeated transmission of ultrasonic signals by means of at least one ultrasonic transducer and the reception of the ultrasonic echoes which correspond to the obstacles encountered by the transmitted signals in their propagation direction, which method includes the following operations:
(a) storing the echoes of an echographic line;
(b) determining, for two distinct time slots which are linked to the instants ($\tau_A$, $\tau_B$), the power spectra (R($\tau_A$,f), R($\tau_B$,f)) corrected for the diffraction effect;
characterized in that it is intended to determine the frequency-dependency of the scatter function U(f) = af$^b$ of the medium investigated, where a and b are coefficients and the scatter function is linked to the power spectrum $S_W(\tau,f)$ of the echoes received in a time slot W at the instant $\tau$ by the relation

$S_W(\tau,f) = |G(f)|^2 \cdot |(U(f)|^2 \cdot D(\tau,f) \cdot e^{-2\alpha(f)c\tau}$, where $|G(f)|^2$ depends on the transmitted signal and the transducer, D($\tau$,f) represents the diffraction effect and $\alpha$(f) and c correspond to the attenuation and to the speed, respectively, of the ultrasonic signals in the medium investigated, and in that it also comprises the following operations:
(c) storing and/or displaying the frequency-dependency of the scatter function of the medium investigated in the following steps:
(c$_I$) calculating, on the basis of the corrected power spectra (R($\tau_A$,f), R($\tau_B$,f)), the expression:

$$T(f, \tau_A, \tau_B) = \frac{|R(\tau_A,f)|^{\varepsilon}}{R(\tau_B,f)} \quad \text{where} \quad \varepsilon = \tau_B / \tau_A;$$

(c$_2$) converting the expression T(f) $\cdot \frac{1}{2}(\xi-1)$ into logarithmic form on base 10;
(c$_3$) storing and/or displaying on a display device a signal which is proportional to said logarithmic form;
(d) repeating the above operations for other pairs of time slots, corresponding each time to boundaries of homogeneous zones of the medium investigated, and for other echographic lines.

2. A device for the ultrasonic, echographic investigation of media by means of the method claimed in Claim 1, comprising at least one ultrasonic transducer which is connected to a transmitter stage for a repeated transmission of ultrasonic signals and to a receiver stage for the reception of ultrasonic echoes corresponding to the obstacles encountered by the transmitted signals in their propagation direction, which receiver stage comprises:
(A) a stage (100) for storing the echoes of an echographic line, comprising an analog-to-digital converter (101) and a digital memory (102);
(B) a stage (200) for determining the ratio of the power spectra (R($\tau_A$,f), R($\tau_B$,f) corrected for the diffraction effect for two distinct time slots which are linked to the instants ($\tau_A$, $\tau_B$), which stage (200) is composed of two parallel channels (210, 220), each of which successively includes a circuit (212, 222) for multiplying the output signal of the stage for storing the echographic line by the output signal of a circuit (201) for selecting the time slot, a circuit (213, 223) for calculating the Fourier transform, a circuit (214, 224) for calculating the square of the modulus, and a diffraction correction stage (215, 225, 250); characterized in that for the determination of the frequency-dependency of the scatter function U(f) = af$^b$ of the medium investigated, where a and b are coefficients and the scatter function is linked to the power spectrum $S_W(\tau,f)$ of the echoes received in a time slot W at the instant $\tau$ by the relation

$S_W(\tau,f) = |G(f)|^2 \cdot |(U(f)|^2 \cdot D(\tau,f) \cdot e^{-2\alpha(f)c\tau}$, where $|G(f)|^2$ depends on the transmitted signal and the transducer, D($\tau$,f) represents the filtering effect due to the diffraction, and $\alpha$(f) and c correspond to the attenuation and to the speed, respectively, of the ultrasonic signals in the medium investigated, which receiver stage also comprises:
(C) a stage (300) for the storage and/or display of the scatter function of the medium investigated, comprising a series connection of:
(a) a circuit (301) for calculating, on the basis of corrected power spectra R($\tau_A$,f) and R($\tau_B$,f), the expression:

$$T = (\frac{a_1}{a_2})^{2(\varepsilon-1)} \cdot (f^{b_1-b_2})^{2(\varepsilon-1)} = \frac{|R(\tau_A,f)|^{\varepsilon}}{R(\tau_B,f}$$

where $a_1$, $a_2$, $b_1$, $b_2$ are the values of the coefficients a and b of said scatter function for the medium investigated and for a reference medium, respectively, which serves for the correction of the diffraction effect and for which the frequency-dependency of the scatter function is known, and where $\xi$ is the ratio of the two instants ($\tau_A$, $\tau_B$);

(b) a logarithmic amplifier (302) which supplies a signal which is proportional to $\log_{10} T(f) \cdot \frac{1}{2}(\xi-1)$;

(c) an arithmetic circuit (303) which enables the storage, or the display on a display device (304), of the scatter function of the medium investigated.

## Patentansprüche

1. Verfahren zum Untersuchen von Medien mittels Ultraschall-Echographie durch wiederholtes Ausstrahlen von Ultraschall-Signalen mit Hilfe wenigstens eines Ultraschall-Wandlers und durch den Empfang von Ultraschall-Echos entsprechend den in ihrer Fortpflanzungsrichtung von den ausgesandten Strahlen vorgefundenen Hindernissen, wobei das Verfahren folgende Operationen umfaßt:

(a) Speicherung der Echos einer Echographiezeile;

(b) Bestimmung der in bezug auf die Diffraktionswirkung korrigierten Leistungsspektren ($R(\tau_A,f)$, $R(\tau_B,f)$ für zwei unterschiedliche Zeitfenster, die mit den Zeitpunkten ($\tau_A$, $\tau_B$) verknüpft sind, dadurch gekennzeichnet, daß das Verfahren zum Bestimmen der Frequenzabhängigkeit von der Diffusionsfunktion des untersuchten Mediums $U(f) = af^b$ dient, wobei a und b Koeffizienten sind, und die Diffusionsfunktion mit dem Leistungsspektrum $S_W(\tau,f)$ der empfangenen Echos in einem Zeitfenster W zum Zeitpunkt durch die Gleichung $S_W(\tau,f) = |\,G(f)\,|^2 \cdot |\,(U(f)\,|^2 \cdot D(\tau,f) \cdot e^{-2\alpha(f)c\tau}$ verknüpft ist, worin $|\,G(f)\,|^2$ vom Emissionssignal und vom Wandler abhängig ist, $D(\tau,f)$ die Diffraktionsauswirkung übersetzt, und $\alpha(f)$ und c der Abschwächung bzw. der Geschwindigkeit der Ultraschall-Signale im untersuchten Medium entsprechen, und daß das Verfahren außerdem folgende Operationen umfaßt:

(c) Speicherung und/oder Darstellung der Frequenzabhängigkeit der Diffusionsfunktion des untersuchten Mediums in folgenden Schritten:

(c1) Berechnung der Gleichung

$$T(f,\tau_A,\tau_B) = \frac{|R(\tau_A,f)|}{R(\tau_B,f)}^{\in} \quad \text{worin} \in = \tau_B / \tau_A \text{ ist,}$$

ausgehend von den korrigierten Leistungsspektren $R(\tau_A,f)$, $R(\tau_B,f)$,

(c2) Umwandlung der Beziehung $T(f) \cdot \frac{1}{2}(\xi-1)$ in logarithmischer Form auf der Basis 10,

(c3) Speicherung und/oder Darstellung auf einem Bildwiedergabegerät eines der genannten logarithmischen Form proportionalen Signals,

(d) Wiederholung der vorstehenden Operationen für andere Zeitfensterpaare die jeweils Grenzen von homogenen Gebieten des untersuchten Mediums entsprechen, und für andere echographische Zeilen.

2. Anordnung zur Untersuchung von Medien mittels Ultraschall-Echographie zur Durchführung des Verfahrens nach Anspruch 1, mit wenigstens einem Ultraschall-Wandler, der einer Emissionsstufe zur Gewährleistung einer wiederholten Emission von Ultraschall-Signalen und einer Empfangsstufe zur Gewährleistung des Empfangs der Ultraschall-Signale entsprechend in ihrer Fortpflanzungsrichtung von den ausgesandten Signalen vorgefundenen Hindernissen zugeordnet ist, wobei die Empfangsstufe folgende Elemente enthält:

(A) eine Speicherstufe (100) für Echos aus einer echographischen Zeile, wobei diese Stufe aus einem Analog/Digitalwandler (101) und einem digitalen Speicher (102) besteht;

(B) eine Bestimmungsstufe (200) zum Bestimmen des Verhältnisses der in bezug auf die Diffraktionsauswirkung korrigierten Leistungsspektren ($R(\tau_A,f)$, $R(\tau_B,f)$ für zwei unterschiedliche und mit den Zeitpunkten ($\tau_A$, $\tau_B$) verknüpften Zeitfenster, wobei diese Stufe (200) aus zwei parallel verlaufenden Wegen (210, 220) zusammengesetzt ist, die je aufeinanderfolgend aus einer Multiplikationsschaltung (212, 222) zum Multiplizieren des Ausgangssignals der Speicherstufe der echographischen Leitung mit dem Ausgangssignal einer Zeitfensterwählschaltung (201), einer Berechnungsschaltung (213, 223) zum Berechnen der Fourier-Transformierten, einer Berechnungsschaltung (214, 224) zum Berechnen des Quadratmoduls und einer Diffraktionskorrekturstufe (215, 225, 250) bestehen, dadurch gekennzeichnet, daß zum Bestimmen der Frequenzabhängigkeit von der Diffusionsfunktion des untersuchten Mediums $U(f) = af^b$, wobei a und b Koeffizienten sind, und die Diffusionsfunktion mit dem Leistungsspektrum $S_W(\tau,f)$ der empfangenen Echos in einem Zeitfenster W entsprechend einer Fortpflanzungszeit $\tau$ durch die Gleichung

$S_W(\tau,f) = |\,G(f)\,|^2 \cdot |\,(U(f)\,|^2 \cdot D(\tau,f) \cdot e^{-2\alpha(f)c\tau}$ verknüpft ist, worin $|\,G(f)\,|^2$ vom Emissionssignal und vom Wandler abhängig ist, $D(\tau,f)$ die Diffraktionsauswirkung darstellt, und $\alpha(f)$ und c der Abschwächung bzw. der Geschwindigkeit der Ultraschall-Signale im untersuchten Medium entsprechen, die Empfangsstufe außerdem folgende Elemente enthält:

(C) eine Speicher- und/oder Darstellungsstufe (300) zum Speichern und/oder Darstellen der Diffusionsfunktion des untersuchten Mediums, wobei diese Stufe in Reihenschaltung folgende Elemente enthält:

(a) eine Berechnungsschaltung (301) der Gleichung

$$T = \left(\frac{a1}{a2}\right)^{2(\xi-1)} \cdot (f^{b1-b2})^{2(\xi-1)} = \frac{|R(\tau_A,f)|^{\xi}}{R(\tau_B,f)},$$

ausgehend von den korrigierten Leistungsspektren $R(\tau_A,f)$ und $(R(\tau_B,f)$, worin a1, a2, b1 und b2 für das untersuchte Medium bzw. für ein Bezugsmedium zum Korrigieren der Diffraktionsauswirkung, für das die Frequenzabhängigkeit der Diffusionsfunktion bekannt ist, die Werte der Koeffizienten a und b der Diffusionsfunktion sind und das Verhältnis der beiden Zeitpunkte ($\tau_A$, $\tau_B$) ist,

(b) einen logarithmischen Verstärker (302) zum Liefern eines dem Ausdruck $\log_{10} T(f) \cdot \frac{1}{2}(\xi-1)$, proportionalen Signals;

(c) eine arithmetische Verarbeitungsschaltung (303), die die Speicherung oder die Darstellung an einem Bildwiedergabegerät (304) der Diffusionsfunktion des untersuchten Mediums ermöglicht.

FIG.1

$$\log_{10} T \frac{1}{2\left(\frac{1}{3}-1\right)}$$

$$\log_{10} f$$

FIG.2